# EUROPEAN PATENT SPECIFICATION

(11) **EP 1 642 503 B1**
(45) Date of publication and mention of the grant of the patent: **14.03.2012**
(21) Application number: 05021608.4
(22) Date of filing: 04.10.2005
(51) Int. Cl.: A21C 3/02

(54) **Vacuum dough rolling apparatus**
Vakuumrollvorrichtung für Teig.
Dispositif pour rouler de la pâte sous vide

(30) Priority: 04.10.2004 IT PR20040069
(43) Date of publication of application: 05.04.2006
(73) Proprietor: Storci S.p.A., 43044 Collecchio PR (IT)
(72) Inventor: Storci, Anzio, 43044 Collecchio (Parma) (IT)
(74) Representative: Guareschi, Antonella

(56) References cited:
- JP-A- 59 213 373
- US-A- 2 159 044
- US-A- 2 246 949
- US-A1- 2004 156 968

## Description

This invention relates to a vacuum dough rolling apparatus.

In industrial food production dough rolling apparatuses are used which receive the incoming dough from the processing line and roll it through a set of rollers or cylinders, thereby producing an endless thin layer, known as dough sheet, which is later processed into different kinds of pasta.

A document of the prior art, US2004/0156968, discloses a method and device of kneading dough for making bread or similar products. The device comprises one or more pipes for discharging the atmosphere present in the chamber. These pipes open out in the chamber at a distance from the dough. They can be situated on the lid or on the top part of the vessel, above the dough. These discharge pipes are connected to at least one vacuum pump, which provides a partial vacuum in the chamber. The atmosphere in the chamber is thus under negative pressure with respect to the atmospheric pressure outside the chamber and with respect to the pressure in the supply means. The bearing is designed to provide a total seal of the inside of the vessel with respect to the ambient atmosphere outside it. To this end, the bearing comprises dynamic sealing means comprising a plurality of lip joints mounted in series and fitted in a part of the seat called a housing, adjacent to the opening formed in the side wall of the vessel. Particulary three lip joints are provided, between a shoulder of the housing and an internal circlip inserted in a groove formed in the housing.

Previous document and general prior art dough rolling apparatus do not operate under vacuum, or not with a sufficient degree of vacuum.

For vacuum operation, appropriate arrangements have to be provided, particularly any air flow between assembled components have to be reduced, and this is obtained by using appropriate sealing means, which allow to reduce energy wastes caused by dispersion in improperly insulated apparatuses, and to maintain a high process quality.

However, insulation of the apparatus shall account for periodic maintenance, and even part replacement requirements: therefore the usual sealing means, such as glues or silicone compounds.

Therefore, the object of this invention is to provide an appropriate system for sealing the dough rolling apparatus, by using seals in suitable positions between the parts of the apparatus, thereby ensuring a substantially hermetic seal against air flows.

The advantages that may be achieved by the above arrangements are:
- a shorter time during which the dough, thence the dough sheet, remains in contact with air;
- preservation of the organoleptic properties of pasta;
- guaranteed asepsis of the process.

These objects and advantages are achieved by the vacuum dough rolling apparatus of this invention, which is characterized as defined in the annexed claims.

These and other features will be more apparent from the following description of a few embodiments, which are shown by way of example and without limitation in the accompanying drawings, in which:
- Figure 1 is a perspective end view of a vacuum dough rolling apparatus;
- Figure 2 is a front view of the apparatus of the previous figure;
- Figure 3 shows a longitudinal section of the apparatus as shown in Figure 1;
- Figure 4 is a perspective view of an A-A section of Figure 2;
- Figure 5 is a side view of an A-A section of Figure 2;
- Figure 6 shows a B-B section of Figure 5;
- Figures 7 and 8 are exploded views of the front portion of the vacuum dough rolling apparatus of Figure 1.

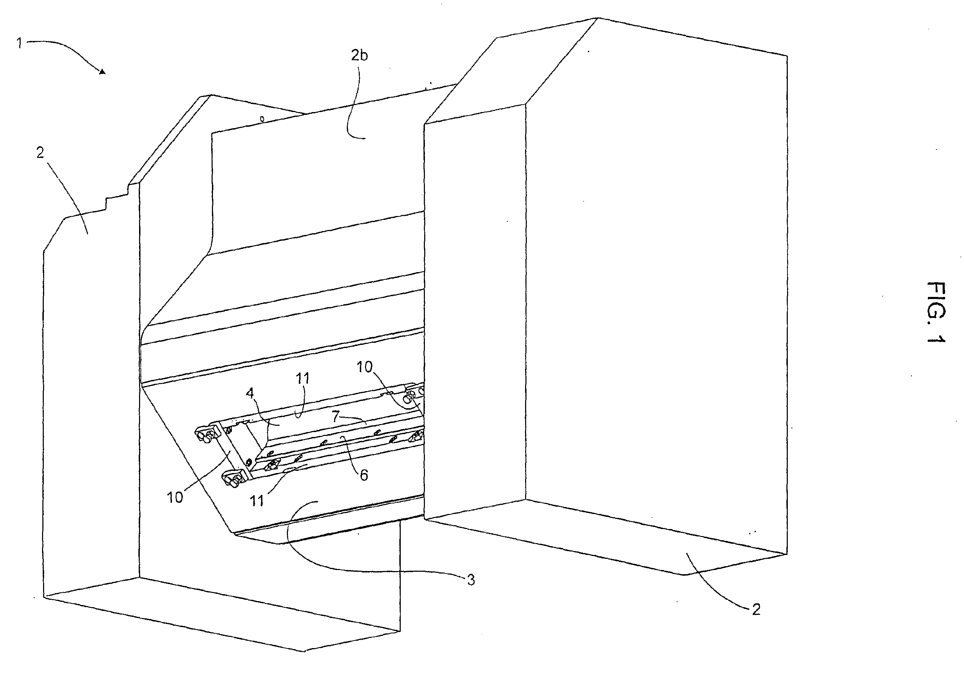

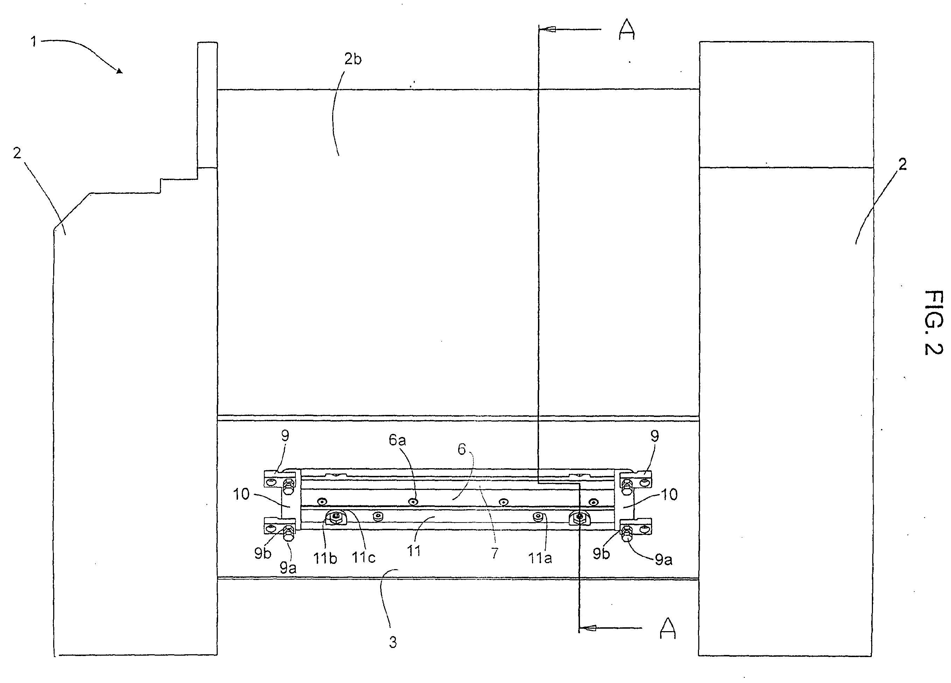

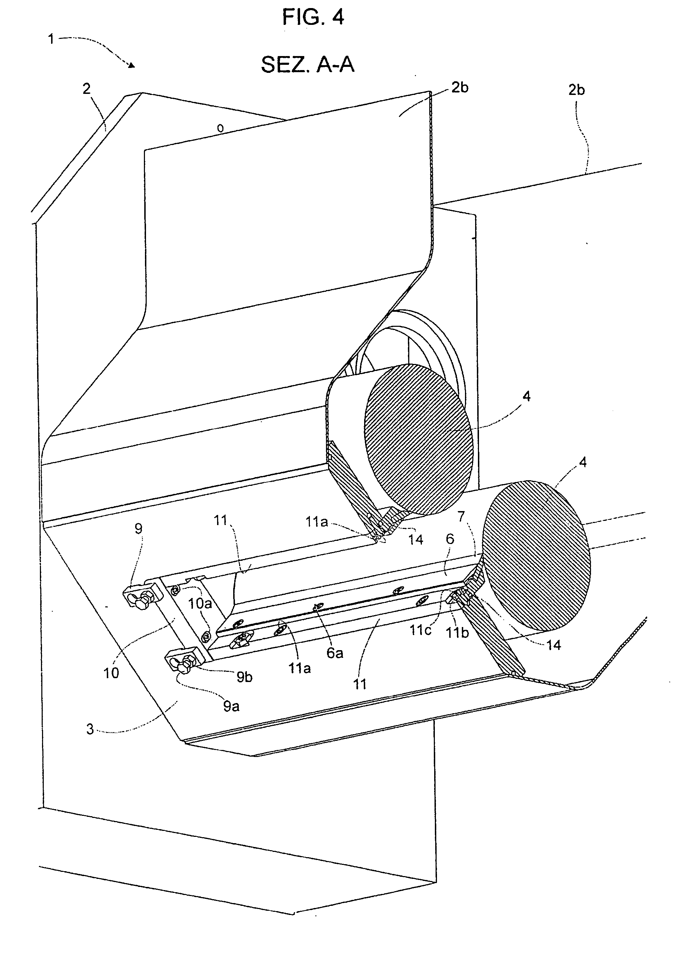

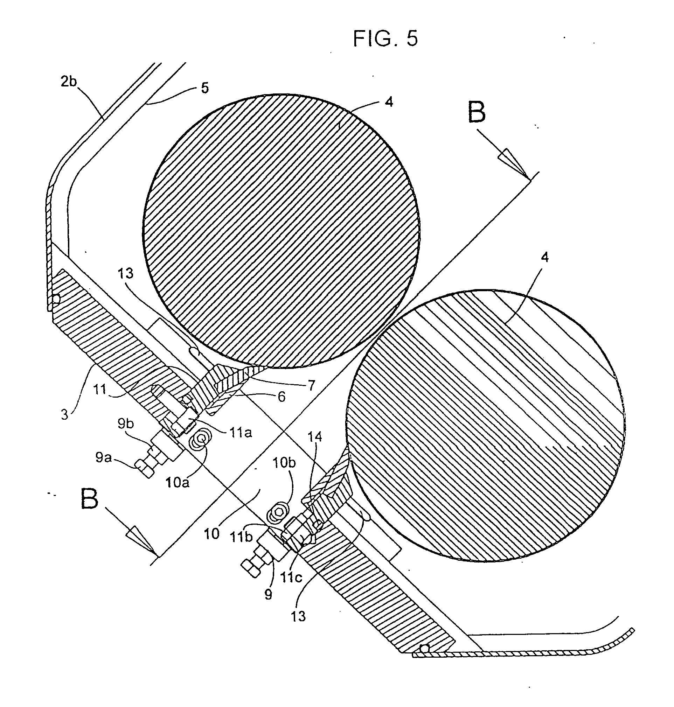

Referring to Figures 1, 2, 3, 4 and 5, a vacuum dough rolling apparatus, denoted by 1, has two fixed lateral shoulders 2 and is enclosed by a casing 2b, which abuts against an end plate 3 situated in front of a pair of finishing rollers 4 (in the apparatus 1), which roll the dough to thereby obtain the dough sheet.

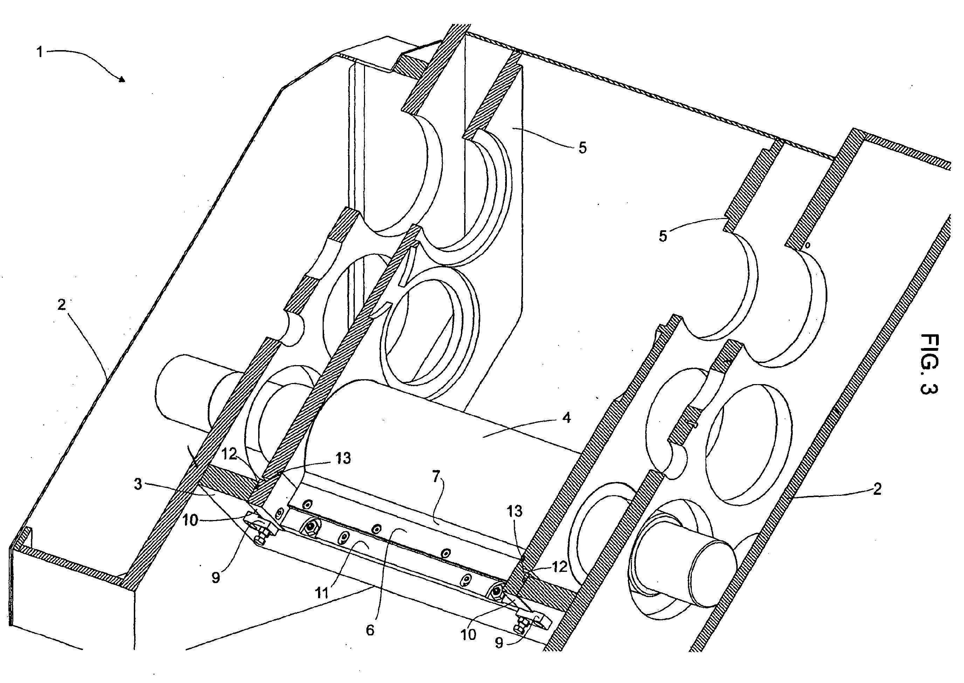

As shown in Figure 3, the set of finishing rollers 4 is preceded by a set of appropriately profiled rollers, not shown, which are known as kneading rollers whose function is to receive the incoming dough and knead it before rolling.

The end plate 3 must obviously have a central aperture, having a generally rectangular shape for the dough to exit the apparatus 1.

Four metal members, particularly two scraper plates 11 and two lateral inserts 10 are secured along the periphery of said aperture.

The scaper plates 11 are placed along the longer sides of the aperture while the lateral inserts 10 are placed along the shorter sides.

The scraper plate 11 is shaped in such a manner as to receive a scraper 7, which is pressed thereon with the help of a scraper presser 6, fastened by screws 6a.

A few adjustment bolts 11c provide adjustment of the distance between the scraper 7 and its respective finishing roller 4 against which it abuts: these adjustment bolts 11c are tightened in the scraper plate 11 and have a conical end portion which engages in corresponding countersinks in the end plate 3; these countersinks are offset from the axis of the bolts 11c so that a different tightening depth allows adjustment of the distance between the scraper 7 and the finishing roller 4.

These adjustment bolts 11c are locked by a nut 11b, whereas the scraper plate 11 is secured by means of screws 11a, embedded in eyelets 11d in the plate.

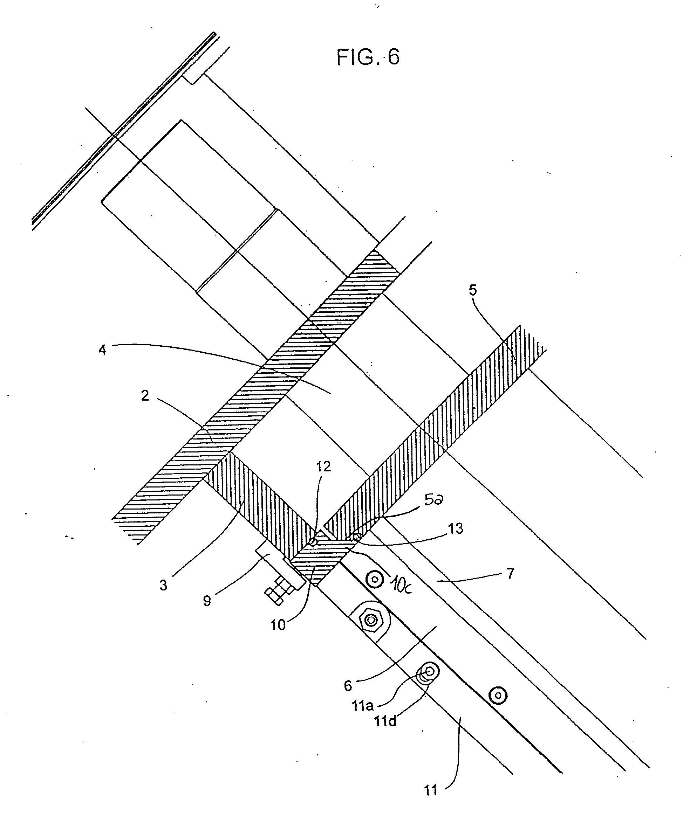

The function and position of the lateral inserts 10 is clearly shown in Figure 6: they abut against an inner sidewall 5, which slides along the axis of the finishing roller 4 and carries the antifriction half bearings which support the rollers.

Figure 6 also shows the particular conformation of the lateral insert 10, which has a substantially quadrangular section with a triangular projection 10c facing toward the inside of the apparatus 1, i.e. toward the finishing rollers 4, and this triangular projection 10c is designed to abut against the inner sidewall 5 when the apparatus is closed, in the dough rolling condition.

This inner sidewall 5 has a beveled surface 5a with about the same inclination as the triangular projection 10c of the lateral insert 10 in contact therewith: such inclination is only different on the seal of the sidewall 13 to ensure contact therewith.

The basic feature of the apparatus 1 is that it has special sealing means in corresponding housings or grooves, interposed between assembly components around the finishing rollers 4, i.e.:
- between the end plate 3 and the scraper plates 11,
- between the end plate 3 and the lateral inserts 10,
- between the lateral inserts 10 and the inner sidewalls 5.

Still from Figure 6, it is apparent that a lateral seal 13 is placed in a corresponding housing of the inner sidewall between two abutting surfaces, i.e. the triangular projection 10c and the inner sidewall 5, which seal extends all along the triangular projection 10c of the lateral insert 10 to safely remove air flows between the contacting surfaces.

This sidewall seal 13 is a little larger than the corresponding housing, to allow contact to occur along said sidewall seal 13 as the two above elements are closed.

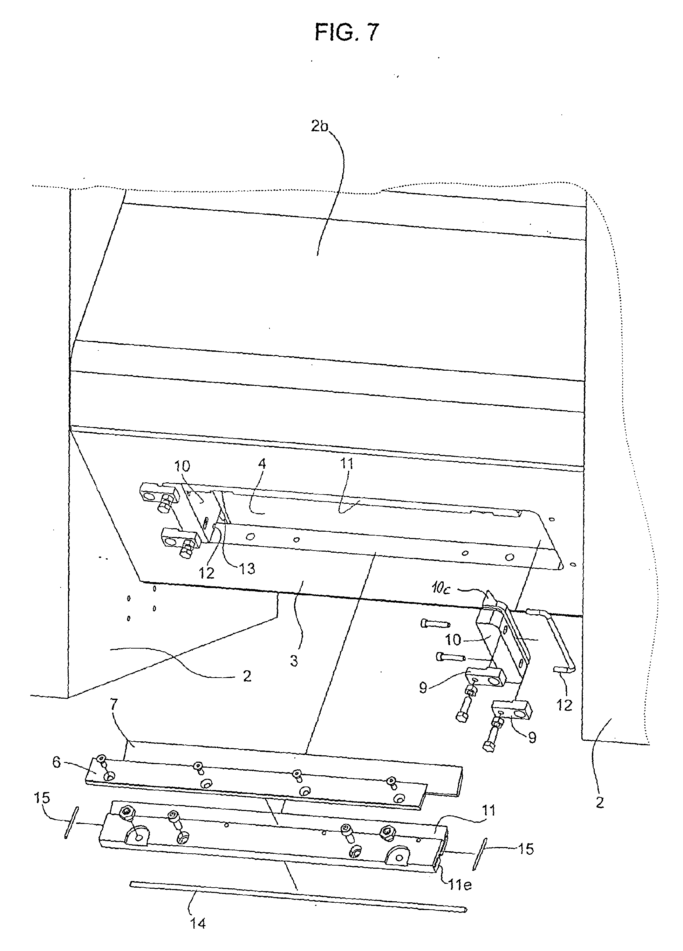

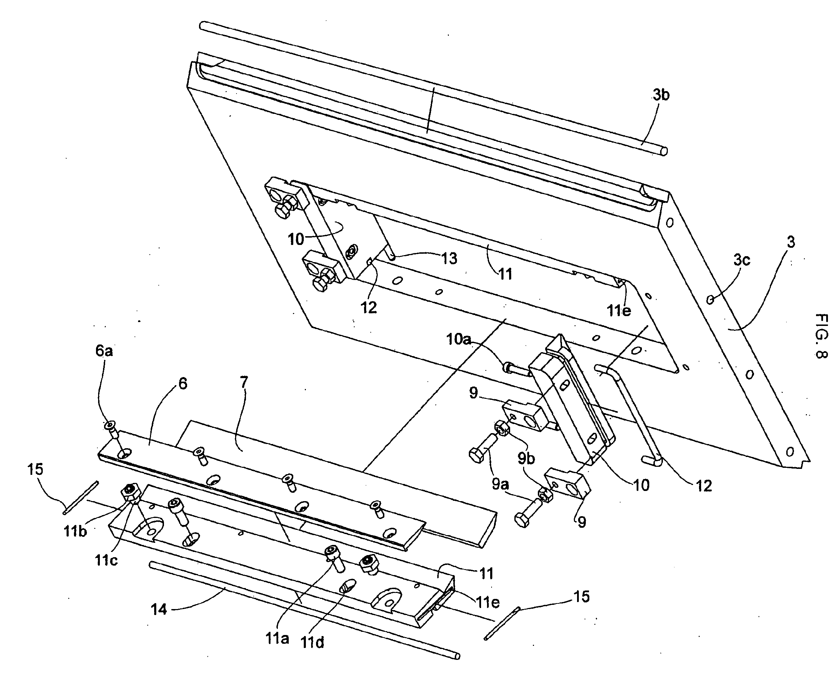

As shown in Figures 7 and 8, which represent the assembly in exploded views, another seal, referred to as lateral seal 12, is inserted in a housing of the lateral insert 10.

More specifically, the lateral seal 12 extends along the three sides of the lateral insert 10 which are in contact with the surface of the aperture in the end plate 3.

Like the sidewall seal 13, the lateral seal 12 is a little larger than the corresponding housing 12a, to ensure a safe sealing effect against air flows.

The lateral insert 10 is secured to the end plate 3 by means of screws 10a, which are tightened in eyelets 10b in the inner surface of the insert.

The lateral insert 10 may be adjusted to provide a proper sealing action against the corresponding inner sidewall 5 by using blocks 9 secured to the end plate 3 and projecting toward the lateral insert 10, in which two screws 9a may be tightened to control the distance of the lateral insert 10.

The screws 9a are then locked by means of a locknut 9b.

Figures 7 and 8 also show two further seals in the scraper plates 11: two end seals 15 and one bottom seal 14.

The bottom seal is placed in the housing that is formed along the surface of the scraper plate 11 in contact with the aperture of the end plate 3, whereas each end seal 15 is interposed between the contact surfaces of the scraper plate 11 and the lateral insert 11, in a housing 11e formed in the scraper plate 11.

Like in the other cases, and for the same reasons, the end seal 15 and the bottom seal 14 are larger than their respective housings.

It can be finally noted that the end plate 3 is secured to the fixed lateral shoulders 2 by means of screws, which engage in corresponding holes 3c of the plate and a seal 3b is interposed between the contact surfaces of the end plate 3 and the casing 2b of the apparatus 1.

As mentioned above, the inner sidewalls 2 have a sliding motion and abut against the lateral inserts 10: according to a possible variant, not shown, this motion toward and against the inner sidewalls 5 may be by obtained by manual means, i.e. control wheels or by equivalent hydraulic or electric means.

Although not shown, it is apparent that the vacuum dough rolling apparatus 1 will be equipped with all the specific vacuum generating details and flow control and metering devices, such as vacuum gauges and shut-off valves.

## Claims

1. Vacuum dough rolling apparatus (1), comprising:
a. a set of appropriately profiled rollers, known as kneading rollers, which receive the incoming dough and knead it;
b. a pair of finishing rollers (4) which roll the incoming dough from the kneading rollers, thereby forming the dough sheet;
c. a structure containing the finishing rollers (4) and the kneading rollers, formed by two fixed shoulders (2) and one casing (2b);
d. a pair of inner sidewalls (5), sliding along the axis of the rollers;
e. a rectangular end plate (3), situated in front of the finishing rollers (4) and secured to the two fixed shoulders (2), said end plate (3) having a rectangular aperture at its center for the outgoing dough.
f. a pair of scraper plates (11), secured against the two longer surfaces of the aperture of the end plate (3), the scrapers (7) being secured to each of said scraper plates (11) by a scraper presser (6);
g. a pair of lateral inserts (10), secured against the two shorter surfaces of the aperture of the end plate (3), said inserts, of rectangular shape, ending by a triangular portion (10c) which abuts against each inner sidewall (5);
h. means for adjusting (11b, 11c) and fastening (11a, 11d) the scraper plates (11);
i. means for adjusting (9a, 9b) and fastening (10a, 10b) the lateral inserts (10), said adjustment means being engaged in blocks (9), which are secured to the end plate (3);
j. means for creating a vacuum in the apparatus (1) and flow control and metering devices, such as vacuum gauges and shut off valves;
wherein sealing means (12, 13, 14, 15) are inserted in corresponding housings formed in the scraper plates (11), in the lateral inserts (10) and in the inner sidewalls (5).

2. A dough rolling apparatus (1) as claimed in claim 1, **characterized in that** said sealing means are two lateral seals (12), two sidewall seals (13), two bottom seals (14) and four end seals (15).

3. A dough rolling apparatus (1) as claimed in claim 1, **characterized in that** said sealing means (12, 13, 14, 15) are larger than their respective housings.

4. A dough rolling apparatus (1) as claimed in claim 2, **characterized in that** the end seals (15) are inserted in housings (11e), that are formed in the side ends of each scraper plate (11), said ends being in contact with the lateral inserts (10).

5. A dough rolling apparatus (1) as claimed in claim 2, **characterized in that** the bottom seals (14) are inserted in a housing that are formed along the contact surface of each scraper plate (11) against the end plate (3) against which it is secured.

6. A dough rolling apparatus (1) as claimed in claim 2, **characterized in that** the sidewall seals (13) are inserted in housings that are formed along the beveled surface (5a) of each inner sidewall (5), said beveled surface being in contact with the corresponding triangular portion (10c) of the lateral insert (10).

7. A dough rolling apparatus as claimed in claim 6, **characterized in that** the beveled surface (5a) of the inner sidewall (5) has about the same inclination as the triangular projection (10c) of the lateral insert (10) in contact therewith: such inclination is only different on the seal of the sidewall (13) to ensure contact therewith.

8. A dough rolling apparatus (1) as claimed in claim 2, **characterized in that** the lateral seals (12) are inserted in housings that are formed along the three sides of each lateral insert (10) which are in contact with the end plate (3) in the fastened condition.

9. A dough rolling apparatus (1) as claimed in claim 1, **characterized in that** said sealing means (12, 13, 14, 15) may have a circular or square section.

10. A dough rolling apparatus (1) as claimed in claim 1, **characterized in that** the scrapers (7) are secured to the scraper plates (11) and bolts (11c) provide adjustment of the distance between the scrapers (7) and their respective finishing rollers (4) against which they abut, said adjustment bolts (11c) being tightened in the scraper plates (11) and having a conical end portion which engages in corresponding countersinks in the end plate (3); said countersinks being offset from the axis of the bolts (11c) so that a different tightening depth allows adjustment of the distance between the scrapers (7) and the finishing roller (4); said adjustment bolts (11c) being locked by nuts (11b), and said scraper plates (11) being secured by means of screws (11a) , embedded in eyelets (11d) in the plate.

11. A dough rolling apparatus as claimed in claim 1, **characterized in that** the inner sidewalls (5) have a sliding motion and may be adjusted and closed against the lateral inserts (10) by manual systems, e.g. control wheels, or by similar hydraulic or electric systems.

## Patentansprüche

1. Vakuum-Teigausrollmaschine (1), bestehend aus:
a. einem Satz angemessen profilierter Walzen, bekannt als Knetwalzen, welche den einlaufenden Teig aufnehmen und kneten;
b. einem Paar Feinbearbeitungswalzen (4), welche den aus den Knetwalzen einlaufenden Teig ausrollen und somit das Teigblatt bilden;
c. einer die Feinbearbeitungswalzen (4) und die Knetwalzen einschließende Struktur, welche aus zwei festen Schultern (2) und einem Gehäuse (2b) besteht;
d. einem Paar Innenseitenwänden (5), die entlang der Walzenachse gleiten;
e. einer rechteckigen Endplatte (3), welche gegenüber der Feinbearbeitungswalzen (4) liegt und an die zwei festen Schultern (2) befestigt ist, wobei diese Endplatte (3) in der Mitte eine rechteckige Öffnung für den Teigauslauf aufweist;
f. einem Paar Abstreifblechen (11), welche gegen die zwei längeren Flächen der Öffnung in der Endplatte (3) befestigt sind, wobei die Abstreifer (7) jeweils an die genannten Abstreifbleche (11) mittels eines Abstreiferpressers (6) befestigt sind;
g. einem Paar Seiteneinsätzen (10), welche gegen die zwei kürzeren Flächen der Öffnung in der Endplatte (3) befestigt sind, wobei die genannten rechteckigen Einsätze in einem dreieckigen Abschnitt (10c) enden, der an die jeweilige Innenseitenwand (5) angrenzt;
h. Einstell- (11b, 11c) und Befestigungsmitteln (11a, 11d) der Abstreifbleche (11);
i. Einstell- (9a, 9b) und Befestigungmitteln (10a, 10b) der Seiteneinsätze (10), wobei die genannten Einstellmittel in Blöcken (9) einrasten, die an die Endplatte (3) befestigt sind;
j. Mitteln zur Vakuumerzeugung in der Maschine (1) und Stromregel- und Messvorrichtungen, wie beispielsweise Unterdruckmesser und Abschaltventile;
worin Abdichtungsmittel (12, 13, 14, 15) in entsprechende, in den Abstreifblechen (11), in den Seiteneinsätzen (10) und in den Innenseitenwänden (5) ausgebildete Gehäuse eingefügt sind.

2. Teigausrollmaschine (1) nach Anspruch 1, **dadurch gekennzeichnet, dass** die genannten Abdichtungsmittel aus zwei Seitendichtungen (12), zwei Seitenwanddichtungen (13), zwei Bodendichtungen (14) und vier Enddichtungen (15) bestehen.

3. Teigausrollmaschine (1) nach Anspruch 1, **dadurch gekennzeichnet, dass** die genannten Abdichtungsmittel (12, 13, 14, 15) größer als deren jeweilige Gehäuse sind.

4. Teigausrollmaschine (1) nach Anspruch 2, **dadurch gekennzeichnet, dass** die Dichtungen (15) in Gehäuse (11e) eingefügt sind, die in den Seitenendstücken jedes Abstreifblechs (11) ausgebildet sind, wobei die genannten Seitenendstücke an den Seiteneinsätzen (10) anliegen.

5. Teigausrollmaschine (1) nach Anspruch 2, **dadurch gekennzeichnet, dass** die Bodendichtungen (14) in ein Gehäuse eingefügt sind, das entlang der Kontaktfläche jedes Abstreifblechs (11) gegen die Endplatte (3), an welche es befestigt ist, ausgebildet ist.

6. Teigausrollmaschine (1) nach Anspruch 2, **dadurch gekennzeichnet, dass** die Seitenwanddichtungen (13) in Gehäuse eingefügt sind, die entlang der Schrägfläche (5a) jeder Innenseitenwand (5) ausgebildet sind, wobei die genannte Schrägfläche an dem entsprechenden dreieckigen Abschnitt (10c) des Seiteneinsatzes (10) anliegt.

7. Teigausrollmaschine nach Anspruch 6, **dadurch gekennzeichnet, dass** die Schrägfläche (5a) der Innenseitenwand (5) etwa denselben Neigungswinkel des anliegenden dreieckigen Ansatzes (10c) des Seiteneinsatzes (10) aufweist: dieser Neigungswinkel ist lediglich an der Seitenwanddichtung (13) abweichend, um den Kontakt zu derselben zu gewährleisten.

8. Teigausrollmaschine (1) nach Anspruch 2, **dadurch gekennzeichnet, dass** die Seitendichtungen (12) in Gehäuse eingefügt sind, die entlang der drei Seiten jedes Seiteneinsatzes (10) ausgebildet sind, welche im befestigten Zustand an der Endplatte (3) anliegen.

9. Teigausrollmaschine (1) nach Anspruch 1, **dadurch gekennzeichnet, dass** die genannten Abdichtungsmittel (12, 13, 14, 15) einen Kreis-oder Vierkantschnitt aufweisen können.

10. Teigausrollmaschine (1) nach Anspruch 1, **dadurch gekennzeichnet, dass** die Abstreifer (7) an die Abstreifbleche (11) befestigt sind und Bolzen (11c) zur Einstellung des Abstandes zwischen den Abstreifern (7) und den entsprechenden Feinbearbeitungswalzen (4), gegen die sie lehnen, dienen, wobei die genannten Einstellbolzen (11c) in die Abstreifbleche (11) angezogen sind und einen kegelförmigen Endabschnitt aufweisen, welcher in entsprechende Versenkungen in der Endplatte (3) einrastet; wobei die genannten Versenkungen zur Achse der Bolzen (11c) versetzt sind, sodass eine unterschiedliche Anziehtiefe Einstellungen des Abstandes zwischen den Abstreifern (7) und der Feinbearbeitungswalze (4) ermöglicht; wobei die genannten Einstellbolzen (11c) mittels Schraubenmüttern (11b) gesperrt sind, und die genannten Abstreifbleche (11) mittels in Ösen (11d) in der Platte eingefügte Schrauben (11a) befestigt sind.

11. Teigausrollmaschine (1) nach Anspruch 1, **dadurch gekennzeichnet, dass** die Innenseitenwände (5) eine Gleitbewegung aufweisen und durch manuelle Systeme, wie beispielsweise Handrädern, oder durch ähnliche hydraulische oder elektrische Systeme gegen die Seiteneinsätze (10) eingestellt und gesperrt werden können.

## Revendications

1. Appareil de pate à rouler (1) à vide, comprenant :
a. une série de rouleaux adéquatement profilés, connus comme des rouleaux de pétrissage, qui reçoivent la pâte entrante et la pétrissent ;
b. une paire de rouleaux de finissage (4), qui roulent la pâte entrante depuis les rouleaux de pétrissage, en manière de former la feuille de pâte ;
c. une structure comprenant les rouleaux de finissage (4) et les rouleaux de pétrissage, formés par deux épaulements fixes (2) et un logement (2b) ;
d. une paire de parois latérales intérieures (5), coulissant le long de l'axe des rouleaux ;
e. une plaque d'extrémité rectangulaire (3), située devant les rouleaux de finissage (4) et fixée aux deux épaulements fixes (2), ladite plaque d'extrémité (3) ayant une ouverture rectangulaire près de son centre four la sortie de la pâte ;
f. une paire de plaques (11) de racleurs, fixées contre les deux faces plus longues de l'ouverture de la plaque d'extrémité (3), les racleurs (7) étant fixées à chacune desdites plaques (11) des racleurs par un racleur pressoir (6) ;
g. une paire d'inserts latéraux (10), fixés contre les faces plus courtes de l'ouverture de la plaque d'extrémité (3), lesdits inserts, avec une forme rectangulaire, se terminant par une partie triangulaire (10c) qui bute contre chaque paroi latérale intérieure (5) ;
h. des moyens pour régler (11b, 11c) et fixer (11a, 11d) les plaques (11) des racleurs (11) ;
i. des moyens pour régler (9a, 9b) et fixer (10a, 10b) les inserts latéraux (10), lesdits moyens de réglage étant engagés dans des blocs (9), qui sont fixés à la plaque d'extrémité (3) ;
j. des moyens pour créer un vide dans l'appareil (1) et des dispositifs de contrôle et mesure de débit, comme des vacuomètres et des vannes d' arrêt ;
dans lequel des moyens d'étanchéité (12, 13, 14, 15) sont insérés dans des logements correspondants formés dans les plaques (11) des racleurs, dans les inserts latéraux (10) et dan les parois latérales intérieures (5).

2. Appareil de pâte à rouler (1) selon la revendication 1, **caractérisé en ce que** lesdits moyens d'étanchéité sont deux joints latéraux (12), deux joints de parois latérales (13), deux joints de fond (14) et quatre joints d'extrémité (15).

3. Appareil de pâte à rouler (1) selon la revendication 1, **caractérisé en ce que** les dits moyens d'étanchéité (12, 13, 14, 15) sont plus grands que leur logements respectifs.

4. Appareil de pâte à rouler (1) selon la revendication 2, **caractérisé en ce que** les joints d'extrémité (15) sont insérés dans des logements (11e), qui sont formés dans les extrémités latérales de chaque racleur (11), lesdites extrémités étant en contact avec les inserts latéraux (10).

5. Appareil de pâte à rouler (1) selon la revendication 2, **caractérisé en ce que** les joints de fond (14) sont insérés dans un logement qui est formé le long de la face de contact de chaque racleur (11) contre la plaque d'extrémité (3) contre la quelle il est fixé.

6. Appareil de pâte à rouler (1) selon la revendication 2, **caractérisé en ce que** les joints de parois latérales (13) sont insérés dans des logements qui sont formés le long de la face conique (5a) de chaque paroi latérale intérieure (5), la dite face conique étant en contact avec la correspondante partie triangulaire (10c) de l'insert latéral (10).

7. Appareil de pâte à rouler selon la revendication 6, **caractérisé en ce que** la face conique (5a) de la paroi latérale intérieure (5) a presque la même inclinaison de la saillie triangulaire (10c) de l'insert latéral (10) en contact avec elle : une telle inclinaison est seulement différente sur le joint de la paroi latérale (13) pour assurer le contact avec elle.

8. Appareil de pâte à rouler (1) selon la revendication 2, **caractérisé en ce que** les joints latéraux (12) sont insérés dans des logements qui sont formés le long des trois côtés de chaque insert latéral (10), qui sont en contact avec la plaque d'extrémité (3) dans la condition fixée.

9. Appareil de pâte à rouler (1) selon la revendication 1, **caractérisé en ce que** lesdits moyens d'étanchéité (12, 13, 14, 15) peuvent avoir une section circulaire ou carrée.

10. Appareil de pâte à rouler (1) selon la revendication 1, **caractérisé en ce que** les racleurs (7) sont fixés aux plaques (11) des racleurs, et des boulons (11c) permettent le réglage de la distance entre les racleurs (7) et leur rouleaux de finissage (4) respectifs contre lesquels ils butent, lesdits boulons de réglage (11c) étant serrés dans les plaques (11) des racleurs et ayant une partie terminale conique qui s'engage dans des cavités opposées correspondantes dans la plaque d'extrémité (3) ; lesdites cavités opposées étant décalées par rapport à l'axe des boulons (11c), de sorte que une profondeur de serrage différente permit le réglage de la distance entre les racleurs (7) et le rouleau de finissage (4) ; lesdits boulons de réglage (11c) étant bloqués par des écrous (11b), et lesdites plaques (11) des racleurs étant fixées par des vis (11a), intégrées dans des oeillets (11d) dans la plaque.

11. Appareil de pâte à rouler selon la revendication 1, **caractérisé en ce que** les parois latérales intérieures (5) ont un coulissement et peuvent être réglées et fermées contre les inserts latéraux (10) par des systèmes manuels, par exemple avec des roues de contrôle, ou par des systèmes hydrauliques ou électriques similaires.
